# EUROPÄISCHE PATENTANMELDUNG

(11) **EP 1 277 937 A2**
(43) Veröffentlichungstag der Anmeldung: **22.01.2003**
(21) Anmeldenummer: 02013665.1
(22) Anmeldetag: 20.06.2002
(51) Int. Cl.: F02D 21/08, F02D 9/04

(54) **Verfahren und Vorrichtung zum Betreiben eines Abgasfilters für einen Verbrennungsmotor**

(30) Priorität: 26.06.2001 DE 10130634
(71) Anmelder: MAN Nutzfahrzeuge Aktiengesellschaft, 80976 München (DE)
(72) Erfinder: Schaller, Karl Viktor, Dr.-Ing., 82194 Gr-benzell (DE)

(57) **Zusammenfassung**

Die Erfindung betrifft ein Verfahren und eine Vorrichtung zum Betreiben eines intern regenerierungsfähigen Abgasfilters (9), der im Abgasstrang (8/1, 8/2) eines Verbrennungsmotors (6), insbesondere eines Nutzfahrzeuges, nach einer Abgasstauklappe (14) angeordnet ist, wobei vom Abgasstrang (8/1, 8/2) durch gesteuertes Öffnen einer Abgasrückführungsklappe (12) Abgas (7/1) über wenigstens eine Abgasrückführleitung (10) zu einer Ladeluftleitung (5) rückführbar ist. Es ist Aufgabe der Erfindung, die Abgastemperatur in einem intern regenerierungsfähigen Abgasfilter (9) für einen Verbrennungsmotor (6), insbesondere eines Nutzfahrzeuges, - unabhängig von der Drehzahl und der Last des Verbrennungsmotors (6) und ohne einer hierdurch verursachten Erhöhung des Treibstoffverbrauchs - oberhalb eines arbeitsfähigen Prozesswertes zu halten. Diese Aufgabe wird erfindungsgemäß dadurch gelöst, dass die Abgasstauklappe (14) - zumindest im Leerlaufbetrieb und gegebenenfalls im Schubphasen- bzw. Schwachlastbetrieb des Verbrennungsmotors (6) zwecks Erhöhung der Temperatur des Abgases (7/2) im Abgasfilter (9) - vollständig oder teilweise geschlossen wird, und zusätzlich die Abgasrückführungsklappe (12) vollständig oder teilweise geöffnet wird, wobei die Abgasstauklappe (14) und die wenigstens eine Abgasrückführungsklappe (12) durch Betätigungselemente (13, 15) in ihren einstellbaren Funktionsstellungen betätigbar sind, welche ihre Stellbefehle von einer wenigstens von einer Motordrehzahl und/oder einer Gaspedalstellung abhängigen elektronischen Steuer- oder Regeleinheit (16) erhalten.

## Beschreibung

Die Erfindung betrifft gemäß dem Oberbegriff der Ansprüche 1 und 4 ein Verfahren bzw. eine Vorrichtung zum Betreiben eines intern regenerierungsfähigen Abgasfilters, der im Abgasstrang eines Verbrennungsmotors, insbesondere eines Nutzfahrzeuges, nach einer Abgasstauklappe angeordnet ist, wobei vom Abgasstrang durch gesteuertes Öffnen einer Abgasrückführungsklappe Abgas über wenigstens eine Abgasrückführleitung zu einer Ladeluftleitung rückführbar ist.

Großvolumige Verbrennungsmotoren (Dieselmotoren) von Omnibussen sind häufig mit CRT-(Continuosly regenerating trap)-Partikelfiltern ausgestattet. Bei einem Stop-and-Go-Betrieb der Omnibusse kann es insbesondere bei einem Leerlaufbetrieb des Verbrennungsmotors (Dieselmotors) und bei einem hohen Luftmassendurchsatz, beispielsweise bei einem Schubphasenbetrieb des Verbrennungsmotors (Dieselmotors) am CRT-Partikelfilter vorkommen, dass eine für dessen kontinuierliche Regeneration erforderliche Betriebstemperatur nicht erreicht wird. Hierdurch kann eine Funktionsbeeinträchtigung des CRT-Partikelfilters verursacht sein. Dieses Problem wird bislang durch eine Veränderung eines Einspritzkennfeldes am Verbrennungsmotor (Dieselmotor) gelöst, wobei zur Erhöhung der Abgastemperatur Kraftstoff in den Verbrennungsmotor (Dieselmotor) oder vor dem CRT-Partikelfilter eingespritzt wird.

Eine andere Lösungsvariante besteht darin, eine Abgasstauklappe entweder in einem dem Verbrennungsmotor (Dieselmotor) oder in einem dem CRT-Partikelfilter nachgeordneten Abgasrohr vorzusehen, mittels dieser infolge eines Rückstaus der heißen Abgase im CRT-Partikelfilter eine Temperaturerhöhung in diesem erzielt ist. Beide Verfahren weisen jedoch den Nachteil eines erhöhten Treibstoffverbrauches auf.

Aus der DE 199 40 264 A1 sind Verbrennungsmotoren für Kraftfahrzeuge bekannt, welche als Motorbremse eine Auspuffbremse und zusätzlich eine Abgasrückführung mit steuerbarem Durchlass aufweisen. Hierbei wird zum Abbremsen des Kraftfahrzeuges die Motorbremse geschlossen und die Abgasrückführung vollständig oder teilweise geöffnet. Dabei wird die Motorbremse in eine Schließstellung gebracht, in der ein Ausströmen von Verbrennungsgasen des Verbrennungsmotors durch Ausnehmungen in der Drosselklappe, durch Nuten in einem Schließorgan der Motorbremse oder durch Bypass-Kanäle der Motorbremse möglich ist. Die Motorbremse kann in der Schließstellung als Absperrorgan oder als Drossel für die Verbrennungsgase des Verbrennungsmotors wirken. Ziel dieser Ausführung ist es, die Dosierbarkeit der Motorbremse zu steigern.

Es ist Aufgabe der Erfindung, die Abgastemperatur in einem intern regenerierungsfähigen Abgasfilter für einen Verbrennungsmotor, insbesondere eines Nutzfahrzeuges - unabhängig von der Drehzahl und der Last des Verbrennungsmotors und ohne einer hierdurch verursachten Erhöhung des Treibstoffverbrauchs - oberhalb eines arbeitsfähigen Prozesswertes zu halten.

Diese Aufgabe wird erfindungsgemäß dadurch gelöst, dass die Abgasstauklappe - zumindest im Leerlaufbetrieb und gegebenenfalls im Schubphasen- bzw. Schwachlastbetrieb des Verbrennungsmotors zwecks Erhöhung der Abgastemperatur im Abgasfilter - vollständig oder teilweise geschlossen wird und zusätzlich die Abgasrückführungsklappe vollständig oder teilweise geöffnet wird, wobei die Abgasstauklappe und die wenigstens eine Abgasrückführungsklappe durch Betätigungselemente in ihren einstellbaren Funktionsstellungen betätigbar sind, welche ihre Stellbefehle von einer wenigstens von einer Motordrehzahl und/oder einer Gaspedalstellung abhängigen elektronischen Steuer- oder Regeleinheit erhalten.

Mit der erfindungsgemäßen Lösung kann im Leerlauf-, Schub- oder Schwachlastbetrieb des Verbrennungsmotors die Abgasstauklappe vollständig oder teilweise geschlossen und die wenigstens eine Abgasrückführungsklappe vollständig oder teilweise geöffnet werden. Damit kann die Rate des in den Verbrennungsprozess des Verbrennungsmotors rückgeführten Massestroms des Abgases um bis zu über 60 % gesteigert und der durch den Abgasfilter hindurchgeführte Massestrom des Abgases auf etwa 1/3 eines Vergleichswertes eines ungedrosselten Verbrennungsmotors gesenkt werden. Gleichzeitig kann in erwünschter Weise die Temperatur des Abgases vor dem Abgasfilter erheblich erhöht werden, wodurch dessen Prozesssicherheit wesentlich verbessert und ein "Verblocken" im Abgasfilter vermieden ist. Unter "Verblocken" ist ein Verstopfen eines Partikelfilters in einem Abgasfilter aufgrund einer übermäßigen Ansammlung an Partikeln verstanden, welches durch ein Nichterreichen der Regenerierungsbedingungen im Abgasfilter bedingt ist. Des weiteren kann durch die erfindungsgemäße Lösung der Leerlaufverbrauch des Verbrennungsmotors beispielsweise mit einem Abgasfilter (Partikelfilter) auf normalem Ausgangsniveau des Verbrennungsmotors ohne Abgasfilter (Partikelfilter) gehalten werden. Somit ist in vorteilhafter Weise die Abgasrückführung eines Verbrennungsmotors bei dessen Leerlauf- und gegebenenfalls bei dessen Schub- oder Schwachlastbetrieb zur Erzielung der erforderlichen Arbeitsprozesstemperatur in einem regenerierungsfähigen Abgasfilter (Partikelfilter) genutzt. Als Verbrennungsmotor kann ein Dieselmotor oder ein Benzinmotor oder dergleichen für ein Fahrzeug, beispielsweise für ein Nutzfahrzeug vorgesehen sein.

Gemäß einer weiteren Ausgestaltung der Erfindung kann der Abgasfilter durch ein aus einem Oxidationskatalysator und einem Partikelfilter bestehendes CRT-(Continuosly regenerating trap)-System realisiert sein, das während seiner Regenerierungsphasen kontinuierlich oder intermittierend mit einem für Regenerierung geeigneten Abgas beaufschlagbar ist.

Gemäß einer weiteren Ausgestaltung der Erfindung kann während des Schubbetriebes des Verbrennungsmotors und bei geschlossener Abgasstauklappe durch zusätzliche Einspritzung einer bestimmten Kraftstoffmenge in den Verbrennungsmotor die Temperatur des Abgases erhöhbar sein.

Als weitere Ausgestaltung der Erfindung ist zur Durchführung des Verfahrens gemäß Anspruch 4 eine Vorrichtung zum Betreiben eines intern regenerierungsfähigen Abgasfilters gegeben. Der Abgasfilter ist im Abgasstrang eines Verbrennungsmotors, insbesondere eines Nutzfahrzeuges, nach einer Abgasklappe angeordnet ist. Dabei ist vom Abgasstrang durch gesteuertes Öffnen einer Abgasrückführungsklappe Abgas über wenigstens eine Abgasrückführungsleitung zu einer Ladeluftleitung rückführbar. Hierbei ist die Abgasstauklappe - zumindest im Leerlaufbetrieb und gegebenenfalls im Schubphasen- bzw. Schwachlastbetrieb des Verbrennungsmotors zwecks Erhöhung der Abgastemperatur im Abgasfilter - vollständig oder teilweise schließbar und zusätzlich die Abgasrückführungsklappe vollständig oder teilweise zu öffnen, wobei die Abgasstauklappe und die wenigstens eine Abgasrückführungsklappe durch Betätigungselemente in ihren einstellbaren Funktionsstellungen betätigbar sind, welche ihre Stellbefehle von einer wenigstens von einer Motordrehzahl und/oder einer Gaspedalstellung abhängigen elektronischen Steuer- oder Regeleinheit erhalten.

Gemäß einer weiteren Ausgestaltung der Erfindung nach Anspruch 5 kann der Abgasfilter durch ein aus einem Oxidationskatalysator und einem Partikelfilter bestehendes CRT-(Continuosly regenerating trap)-System realisiert sein, das während seiner Regenerierungsphasen kontinuierlich oder intermittierend mit einem für Regenerierung geeigneten Abgas beaufschlagbar ist.

Gemäß einer weiteren Ausgestaltung der Erfindung können die Betätigungselemente zwecks Erhöhung der Abgastemperatur in dem Abgasfilter durch die von der elektronischen Steueroder Regeleinheit ausgehenden Befehle zusätzlich in Abhängigkeit weiterer Daten/Signale, wie beispielsweise einer Ist-Temperatur des Abgasfilters, einer Gaspedalstellung und/oder in Abhängigkeit von Druckwerten in einer Ansaugleitung und/oder im Abgasstrang des Verbrennungsmotors ansteuer-/regelbar sein.

Nachstehend ist die erfindungsgemäße Lösung anhand eines einzelnen Ausführungsbeispieles näher erläutert.

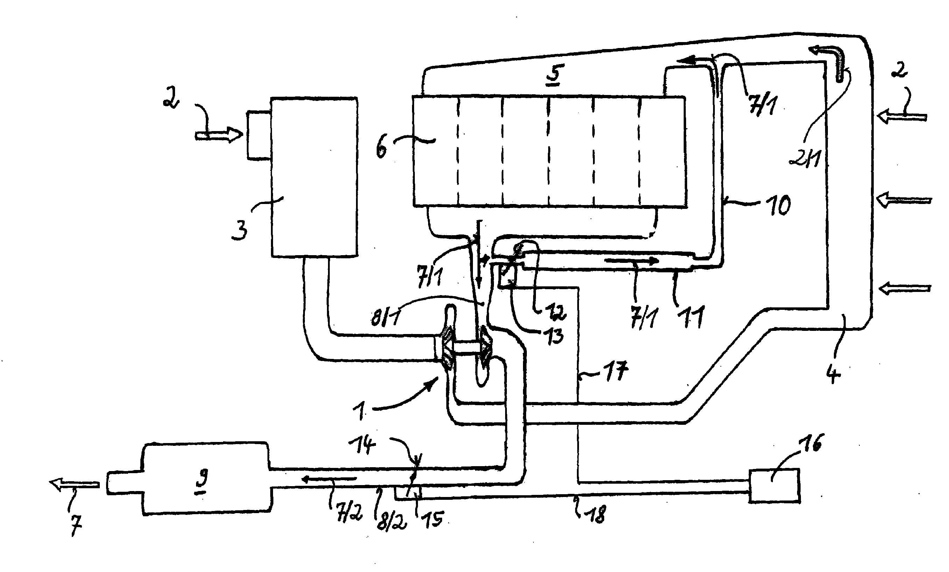

In der Zeichnung zeigt die einzige Figur schematisch vereinfacht als ein Ausführungsbeispiel einen Verbrennungsmotor 6 eines Nutzfahrzeuges mit einem diesem zugeordneten intern regenerationsfähigen Abgasfilter 9. Der Abgasfilter 9 ist in einem Abgasstrang 8/1, 8/2 des Verbrennungsmotors 6 nach einer Abgasstauklappe 14 angeordnet, wobei vom Abgasstrang 8/1, 8/2 durch gesteuertes Öffnen einer Abgasrückführungsklappe 12 Abgas 7/1 über hier eine Abgasrückführleitung 10 zu einer Ladeluftleitung 5 rückführbar ist. Der Verbrennungsmotor 6 ist in diesem Ausführungsbeispiel durch einen Dieselmotor realisiert, kann aber auch durch einen Benzinmotor oder dergleichen gegeben sein. Des weiteren kann der Verbrennungsmotor 6 zum Einsatz in andere Fahrzeuge, wie beispielsweise in einem Schiff vorgesehen sein.

Ein Turbolader 1 saugt laderseitig Ansaugluft 2 über einen Luftfilter 3 an und führt diese als verdichtete Ansaugluft 2/1 über einen Ladeluftkühler 4 und eine Ladeluftleitung 5 zur Verbrennung von Kraftstoff dem Verbrennungsmotor (Dieselmotor) 6 zu. Ein beim Verbrennungsprozess des Kraftstoffes anfallendes heißes Abgas 7/2 wird teilweise über den abgasseitigen Teil des Turboladers 1 und einem Abgasstrang 8/1, 8/2 dem Abgasfilter 9 zugeführt, der hier durch ein CRT- (Continuosly regenerating trap)-System realisiert ist. Dieses CRT-System dient der Reduzierung von Rußpartikeln und besteht aus einer Kombination eines Oxidationskatalysators mit einem Partikelfilter. Der Oxidationskatalysator hat dabei die Aufgabe, das im Abgas 7/2 enthaltene NO mit dem im Abgas 7/2 noch enthaltenen Restsauerstoff an katalytisch wirkenden Oberflächen zu NO₂ aufzuoxidieren.

Das gebildete NO₂ kann dabei die im Partikelfilter abgeschiedenen Rußpartikel zu CO₂ oxidieren und damit den Partikelfilter regenerieren.

Ein anderer Teil des heißen Abgases 7/1 wird über eine einzelne Abgasrückführungsleitung 10 erneut in Ladeluftleitung 5 eingespeist und zusammen mit neuer verdichteter Ansaugluft 2/1 dem Verbrennungsmotor (Dieselmotor) 6 zugeführt. Die hier gezeigte Ausführungsversion zeigt eine einzelne Abgasrückführungsleitung 10, in deren Bereich ein Abgasrückführungskühler 11 angeordnet ist. Alternativ hierzu können auch mehrere Abgasrückführungsleitungen 10 vorgesehen sein.

In der Abgasrückführungsleitung 10 ist eine Abgasrückführungsklappe 12 mit einem Betätigungselement 13 angeordnet, mittels dieser der durch die Abgasrückführungsleitung 10 strömende Massestrom des Abgases 7/1 regulierbar ist. Die Abgasrückführungsklappe 12 ist in dem hier gezeigten Ausführungsbeispiel dem Abgasrückführungskühler 11 vorgeordnet.

Des weiteren ist dem Abgasfilter 9 eine in dem Abgasstrang 8/1, 8/2 angeordnete Abgasstauklappe 14 vorgeordnet. Die Abgasstauklappe 14 ist über ein von einer elektronischen Steuereinheit 16 ansteuerbares Betätigungselement 15 betätigbar, wodurch der zum Abgasfilter 9 strömende Massenstrom des Abgases 7/2 regulierbar ist.

In dem hier gezeigten Ausführungsbeispiel ist die Abgasstauklappe 14 in einem dem Turbolader 1 nachgeordneten Abgasstrangbereich 8/2 zugeordnet. Alternativ hierzu kann die Abgasstauklappe 14 in einem dem Turbolader 1 vorgeordneten Abgasstrangbereich 8/1 angeordnet sein. Die Abgasstauklappe 14 kann durch ein beliebiges Dosierorgan, wie beispielsweise einem Ventil oder dergleichen gegeben sein.

Die Steuereinheit 16, die alternativ als Regeleinheit gegeben sein kann, steuert die Betätigungselemente 13, 15 solcherart, dass die Abgasstauklappe 14 - zumindest im Leerlaufbetrieb und gegebenenfalls im Schubphasen- bzw. Schwachlastbetrieb des Verbrennungsmotors 6 zwecks Erhöhung der Temperatur des Abgases 7/2 im Abgasfilter 9 - vollständig oder teilweise geschlossen wird und zusätzlich die Abgasrückführungsklappe 12 vollständig oder teilweise geöffnet wird.

Die Betätigungselemente 13, 15 sind hierbei in ihren einstellbaren Funktionsstellungen von der wenigstens von einer Motordrehzahl und/oder einer Gaspedalsteuerung abhängigen elektronischen Steuereinheit 16 ansteuerbar. Die Betätigungselemente 13, 15 können elektrisch, pneumatisch oder hydraulisch betreibbar sein.

Des weiteren kann zwecks Erhöhung der Arbeitstemperatur in dem Abgasfilter (9) die in Abhängigkeit von einer Motordrehzahl steuernde elektronische Steuereinheit 16 die Betätigungselemente 13, 15 zusätzlich in Abhängigkeit weiterer Daten/Signale, wie beispielsweise einer Ist-Temperatur des Abgasfilters 9, einer Gaspedalstellung und/oder in Abhängigkeit von Druckwerten in einer Ansaugleitung oder einer Abgasleitung des Verbrennungsmotors (Dieselmotors) 6 ansteuern.

Das CRT-System 9 kann während seiner Regenerierungsphasen kontinuierlich oder intermittierend mit einem für Regenerierung geeigneten Abgas 7/2 beaufschlagbar sein und hierzu durch elektronische Steuer- und/oder Regeleinheiten 16 entsprechend angesteuert werden.

Erfindungsgemäß ist somit die Arbeitstemperatur des Abgasfilters 9 auf hohem Niveau gehalten, indem solche, den Abgasfilter 9 gegebenenfalls abkühlenden Einflüsse wirksam vermieden werden. Dabei werden wenigstens im Leerlauf- oder Schub- oder Schwachlastbetrieb des Verbrennungsmotors 6 Teilmengen des Abgases 7 vom Abgasfilter 9 ferngehalten und über wenigstens eine Abgasrückführungsleitung 10 kurzgeschlossen.

Des weiteren kann während des Schubbetriebes des Verbrennungsmotors 6 und bei geschlossener Abgasstauklappe 14 durch zusätzliche Einspritzung einer bestimmten Kraftstoffmenge in den Verbrennungsmotor 6 die Temperatur des Abgases 7/1, 7/2 erhöhbar sein.

## Patentansprüche

1. Verfahren zum Betreiben eines intern regenerierungsfähigen Abgasfilters (9), der im Abgasstrang (8/1, 8/2) eines Verbrennungsmotors (6), insbesondere eines Nutzfahrzeuges, nach einer Abgasstauklappe (14) angeordnet ist, wobei vom Abgasstrang (8/1, 8/2) durch gesteuertes Öffnen einer Abgasrückführungsklappe (12) Abgas (7/1) über wenigstens eine Abgasrückführleitung (10) zu einer Ladeluftleitung (5) rückführbar ist, **dadurch gekennzeichnet, dass** die Abgasstauklappe (14) - zumindest im Leerlaufbetrieb und gegebenenfalls im Schubphasen- bzw. Schwachlastbetrieb des Verbrennungsmotors (6) zwecks Erhöhung der Temperatur des Abgases (7/2) im Abgasfilter (9) - vollständig oder teilweise geschlossen wird und zusätzlich die Abgasrückungsklappe (12) vollständig oder teilweise geöffnet wird, wobei die Abgasstauklappe (14) und die wenigstens eine Abgasrückführungsklappe (12) durch Betätigungselemente (13, 15) in ihren einstellbaren Funktionsstellungen betätigbar sind, welche ihre Stellbefehle von einer wenigstens einer Motordrehzahl und/oder einer Gaspedalstellung abhängigen elektronischen Steuer- oder Regeleinheit (16) erhalten.

2. Verfahren nach Anspruch 1, **gekennzeichnet dadurch, dass** der durch ein aus einem Oxidationskatalysator und einem Partikelfilter bestehendes CRT-(Continuosly-regenerating-trap)-System realisierte Abgasfilter (9) während seiner Regenerierungsphasen kontinuierlich oder intermittierend mit einem für Regenerierung geeigneten Abgas (7/2) beaufschlagbar ist.

3. Verfahren nach Anspruch 1, **gekennzeichnet dadurch, dass** während des Schubbetriebes des Verbrennungsmotors (6) und bei geschlossener Abgasstauklappe (14) durch zusätzliche Einspritzung einer bestimmten Kraftstoffmenge in den Verbrennungsmotor (6) die Temperatur des Abgases (7/2) erhöhbar ist.

4. Vorrichtung zum Betreiben eines intern regenerierungsfähigen Abgasfilters (9), der im Abgasstrang (8/1, 8/2) eines Verbrennungsmotors (6), insbesondere eines Nutzfahrzeuges, nach einer Abgasstauklappe (14) angeordnet ist, wobei vom Abgasstrang (8/1, 8/2) durch gesteuertes Öffnen einer Abgasrückführungsklappe (12) Abgas (7/1) über wenigstens eine Abgasrückführleitung (10) zu einer Ladeluftleitung (5) rückführbar ist, **dadurch gekennzeichnet, dass** die Abgasstauklappe (14) - zumindest im Leerlaufbetrieb und gegebenenfalls im Schubphasen- bzw. Schwachlastbetrieb des Verbrennungsmotors (6) zwecks Erhöhung der Temperatur des Abgases (7/2) im Abgasfilter (9) - vollständig oder teilweise schließbar und zusätzlich die Abgasrückführungsklappe (12) vollständig oder teilweise zu öffnen ist, wobei die Abgasstauklappe (14) und wenigstens eine Abgasrückführungsklappe (12) in ihre Funktionsstellungen durch Betätigungselemente (13, 15) einstellbar sind, welche ihre Stellbefehle von einer wenigstens von einer Motordrehzahl und/oder einer Gaspedalstellung abhängigen elektronischen Steuer- oder Regeleinheit (16) erhalten.

5. Vorrichtung nach Anspruch 4, **dadurch gekennzeichnet, dass** der Abgasfilter (9) durch ein aus einem Oxidationskatalysator und einem Partikelfilter bestehendes CRT-(Continuosly-regenerating-trap)-System realisiert ist, das während seiner Regenerierungsphasen kontinuierlich oder intermittierend mit einem für Regenerierung geeigneten Abgas (7/2) beaufschlagbar ist, wobei die Betätigungselemente (13, 15) zwecks Erhöhung der Temperatur des Abgases (7/2) in dem Abgasfilter (9) durch die von der elektronischen Steuer- oder Regeleinheit (16) ausgehenden Befehle zusätzlich in Abhängigkeit weiterer Daten/Signale, wie beispielsweise einer Ist-Temperatur des Abgasfilters (9), einer Gaspedalstellung und/oder in Abhängigkeit von Druckwerten in einer Ansaugleitung und/oder im Abgasstrang (8/1, 8/2) des Verbrennungsmotors (6) ansteuer-/regelbar sind.
